## Europäisches Patentamt
## European Patent Office
## Office européen des brevets

(19)

(11) Veröffentlichungsnummer: **0 027 535**
**B2**

(12) **NEUE EUROPÄISCHE PATENTSCHRIFT**

(45) Veröffentlichungstag der neuen Patentschrift:
**19.03.86**

(51) Int. Cl.⁴: **F 16 J 15/20**

(21) Anmeldenummer: **80105414.9**

(22) Anmeldetag: **10.09.80**

(54) Dichtungsring.

(30) Priorität: **22.10.79 DE 2942598**

(43) Veröffentlichungstag der Anmeldung:
**29.04.81 Patentblatt 81/17**

(45) Bekanntmachung des Hinweises auf die Patenterteilung:
**22.06.83 Patentblatt 83/25**

(45) Bekanntmachung des Hinweises auf die Entscheidung über den Einspruch:
**19.03.86 Patentblatt 86/12**

(84) Benannte Vertragsstaaten:
**AT BE CH FR GB IT LI LU NL SE**

(56) Entgegenhaltungen:
**DE - U - 1 953 044**
**FR - A - 1 103 787**
**FR - A - 2 381 222**
**GB - A - 1 288 878**
**GB - A - 2 003 385**
**US - A - 2 717 025**
**US - A - 3 646 846**

**Kunststoff Taschenbuch, Saechtling-Zebrowski, Carl Hanser Verlag München, 1967, 17. Ausgabe, Seiten 212-218**

(73) Patentinhaber: **Feodor Burgmann Dichtungswerke GmbH & Co., Äussere Sauerlacher Strasse 6-8, D-8190 Wolfratshausen 1 (DE)**

(72) Erfinder: **Kraus, Reinhold, Kapellenweg 8, D-8021 Walchstadt (DE)**

(74) Vertreter: **Fehners, Klaus Friedrich, Dipl.-Ing. Dipl.-Wirtsch.-Ing. et al, Patentanwälte Dipl.-Ing. A. Wedde Dipl.-Ing. K. Empl Dipl.-Ing., Dipl.-Wirtsch.-Ing. K. Fehners Schumannstrasse 2, D-8000 München 80 (DE)**

EP 0 027 535 B2

## Beschreibung

Die Erfindung betrifft einen Dichtungsring gemäß Oberbegriff des Anspruches 1.

Ein derartiger Dichtungsring ist bekannt (DE-U-1 953 044) und wird in einer axialen Gleitringdichtung als Gleitring vorgesehen, der an einem relativ hierzu umlaufenden Gegenring aus härterem Material reibend anlie9t. Dabei ist das Graphitmaterial dieses Dichtungsringes mit einer reibungshemmenden, sich bei Wärmeeinwirkung ausdehnenden Schmierflüssigkeit gesättigt und seine Beschichtung aus Kunststoffmaterial umfaßt mit einem mittleren Teil die erste Stirnfläche und mit daran anschliessenden Teilen den Innen- und Außenumfang des Dichtungsringes, während an der zweiten Stirnfläche sein Graphitmaterial unmittelbar in reibender Berührung mit dem Gegenring steht und gegen diesen abdichtet. Mit dieser Ausbildung soll erreicht werden, daß die im Graphitmaterial enthaltene, durch die Reibungswärme expandierende Schmierflüssigkeit nur an der zweiten Stirnfläche des Dichtungsringes austritt.

Bekannt sind ferner Dichtungsringe aus reinem Graphit mit im wesentlichen quadratischem Querschnitt, welche mit ihren Bohrungen dichtend an relativ dazu umlaufenden Wellen oder in Axialrichtung bewegten Stangen anliegen, d. h. als Stopfbuchsdichtungen eingesetzt werden. Solche Dichtungsringe aus Reingraphit, welche keiner Alterung unterworfen sind, können bei sehr hohen Temperaturen eingesetzt werden, ohne daß eine Verhärtung oder Versprödung eintritt, wodurch eine gute Dauerelastizität erhalten bleibt. Nachteilig bei solchen aus Graphit bestehenden Dichtungsringen ist, daß insbesondere an den Berührungsflächen zwischen Welle und Dichtungsring eine elektro-chemische Korrosion auftreten kann und zwar speziell dann, wenn an diesen Berührungsflächen wässrige Elektrolyte, wie z. B. Gebrauchswasser, Salzlösungen usw. anstehen. Durch die hohe Leitfähigkeit von Graphit kann ein Strom zwischen Dichtungsgehäuse, Dichtungsring und der von diesem abzudichtenden Welle fliessen, wobei die als Anode wirkende Metallschicht nach und nach angegriffen wird,

Ein weiterer Nachteil von aus Graphit bestehenden Dichtungsringen ist, daß sich durch Abrieb der Dichtungsringe auf den Wellen oder Spindeln festhaftende Graphitschichten ausbilden können, die einerseits zu sehr hohen unerwünschten Antriebsmomenten und andererseits zu großem Abrieb der Dichtungsringe führen können. Dieser Abrieb kann auch dadurch verstärkt werden, daß Graphit die Neigung zeigt, in die Führungsspalte der Wellen zu fliessen.

Die Erfindung hat sich die Aufgabe gestellt, Graphit-Dichtungsringe, welche mit ihren Bohrungen gegen umlaufende Wellen oder in Axialrichtung bewegte Stangen abdichten, unter Beibehaltung ihrer guten Eigenschaften so weiterzubilden, daß eine elektro-chemische Korrosion praktisch unterbunden und gleichzeitig der Graphitabrieb verhindert wird.

Diese Aufgabe wird erfindungsgemäß dadurch gelöst, daß die Beschichtung aus Polytetrafluoräthylen (PTFE) besteht, zur elektrischen Isolierung gegenüber einer die Bohrung des Dichtungsringes durchdringenden Welle oder Stange vorgesehen ist und als im Querschnitt U-förmiges Profil ausgebildet ist, das mit seinem dichtend an der Welle bzw. Stange anliegenden mittleren Teil den Innenumfang des Dichtungsringes bedeckt und mit seinen beiden daran anschliessenden Schenkeln die Stirnflächen des Dichtungsringes nur auf einen Teil der radialen Ausdehnung bedeckt.

Bei einer solchen Ausbildung eines Dichtungsringes verhindert die Be-Schichtung aus PTFE sowohl elektrische Ströme zwischen Dichtungsring und Welle bzw. Stange, als auch einen Graphitabrieb und das Fliessen des Graphits in die Führungs- bzw. Dichtungsspalte. Da die Stirnfläche des Dichtungsringes von der Beschichtung nur teilweise bedeckt sind, drückt sich diese bei Ausübung eines axialen Drucks, wie er in einer Stopfbuchse auftritt, in das relativ weiche Graphitmaterial ein und wird auch an einem Fliessen in radialer Richtung gehindert.

Bei einem Einsatz als Dichtungs-Packung, bestehend aus einer Mehrzahl von auf einer gemeinsamen Achse unmittelbar nebeneinander angeordneten Dichtungsringen nach der Erfindung sind in zweckmäßiger Ausgestaltung der Erfindung zusätzlich zu diesen Dichtungsringen aus Graphit mindestens als erster und letzter Dichtungsring weitere Dichtungsringe angeordnet, welche aus Reinasbest und/oder aus mit PTFE imprägniertem Reinasbest bestehen. Diese weiteren Dichtungsringe wirken als Kammerungsringe und verhindern, daß unter Druck und Temperatureinfluß ein Fliessen der die Innenumfänge der erfindungsgemäß ausgebildeten Dichtungsringe bedeckenden Teile der PTFE-Beschichtung in axialer Richtung eintritt.

Nachstehend wird die Erfindung anhand der Zeichnungen beispielsweise näher erläutert, in denen zeigen:

Fig. 1 eine Draufsicht auf einen erfindungsgemäß ausgebildeten Dichtungsring;

Fig. 2 einen Schnitt gemäß der Linie II-II in Fig. 1 und

Fig. 3 einen in einer Durchmesserebene gelegenen Schni.tt einer zusätzliche Kammerungsringe enthaltenden Dichtungspackung für eine Stopfbuchse.

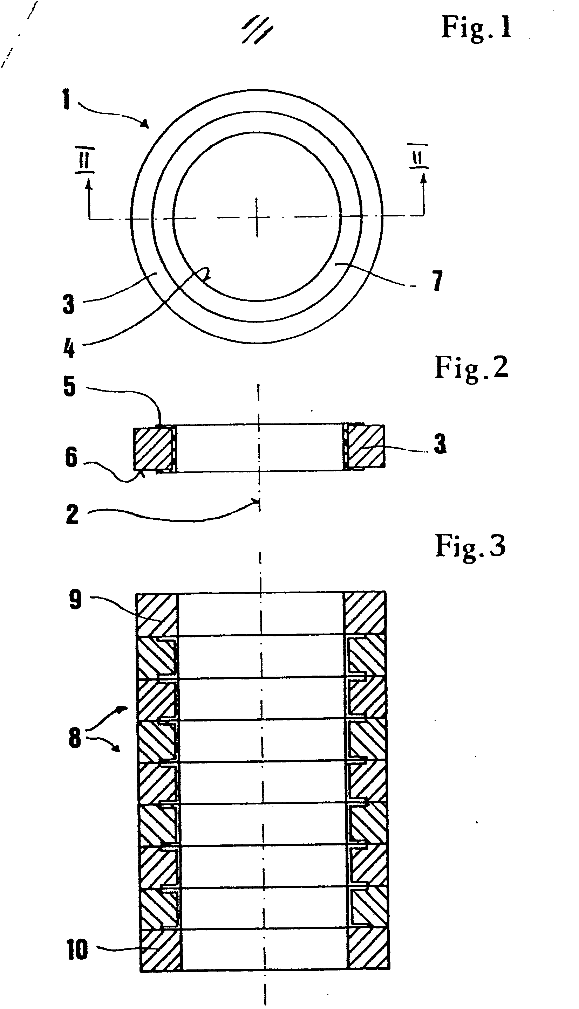

Der in Fig. 1 veranschaulichte, für eine umlaufende Welle bestimmte, in seiner Gesamtheit mit 1 bezeichnete Dichtungsring hat die Gestalt eines kurzen Rohrabschnittes mit einer bestimmten Wanddicke und einer Längsachse Z. Der Dichtungsring weist im wesentlichen quadratische Querschnittsform auf und sein Körper 3 besteht aus reinem Graphit, der eine Pressung in Richtung der Längsachse 2 erfahren hat.

Die axiale Innenfläche des Dichtungsringes 1 ist mit einer aus Polytetrafluoräthylen (PTFE) bestehenden Beschichtung versehen, welche mit einem mittleren Teil 4 den aus Graphit bestehenden Körper 3 des Dichtungsringes gegenüber der abzudichtenden Welle isoliert.

Der mittlere Teil der Beschichtung weist, bezogen auf die Querschnittsdarstellung der Fig. 2, radial nach aussen abstehende Schenkel 5 auf, welche den Dichtungsring 1 jeweils auf seinen Stirnflächen (6) teilweise abdecken, dergestalt, daß diese Schenkel 5 in der Draufsicht nach Fig. 1 jeweils kreisringförmige Flächen 7 bilden. Die Schenkel 5 bzw. Flächen 7 der Beschichtung werden während des Einbauvorganges des Dichtungsringes 1 in eine Stopfbuchse durch den dabei stattfindenden Pressvorgang in das verhältnismäßig weiche Graphitmaterial des Körpers 3 eingedrückt, so daß ein Fliessen des PTFE-Materials der Beschichtung verhindert wird.

In Fig. 3 ist eine Dichtungs-Packung 8 veranschaulicht, welche im vorliegenden Beispiel aus neun Dichtungsringen zusammengesetzt ist. Von diesen Dichtungsringen entsprechen die sieben innenliegenden Dichtungsringe dem vorstehend erläuterten Dichtungsring 1, während der erste Dichtungsring 9 und der letzte Dichtungsring 10 keine Beschichtung 4 besitzen. Diese bilden vielmehr sogenannte Kammerungsringe und bestehen beispielsweise aus mit PTFE imprägniertem Reinasbest-Material. Durch die Anordnung dieser als Kammerungsringe eingesetzten Dichtungsringe 9 und 10 wird verhindert, daß die Beschichtung 4, 5 unter dem Einfluss des im Einbauzustand herrschenden Druckes in Längsrichtung zwischen Dichtungsring und Welle fliesst.

Wie in Fig. 3 weiter veranschaulicht ist, werden die Schenkel 5 der Beschichtung im eingebauten Zustand durch den Druck in die aus Graphit bestehenden Körper 3 der Dichtungsringe eingepreßt, so daß auch ein radiales Fliessen der aus PTFE-Material bestehenden kreisringförmigen Schenkel 5 nach anßen verhindert wird.

Bei Dichtungs-Packungen, welche eine größere Anzahl von mit Beschichtungen 4 versehenen Dichtungsringen 1 aufweisen, können auch beispielsweise aus Reinasbest bzw. aus mit PTFE imprägniertem Reinasbest bestehende Dichtungsringe in bestimmten Abständen zwischen diese eingebaut werden, wenn beispielsweise betriebsbedingte Absaugringe vorgesehen sind.

**Patentansprüche**

1. Dichtungsring aus Graphit mit im wesentlichen quadratischem Querschnitt, welcher an drei aneinandergrenzenden Außenflächen eine Beschichtung aus Kunststoffmaterial aufweist, <u>dadurch gekennzeichnet,</u> daß die Beschichtung (4, 5) aus Polytetrafluoräthylen (PTFE) besteht, zur elektrischen Isolierung gegenüber einer die Bohrung des Dichtungsringes durchdringenden Welle oder Stange vorgesehen ist und als im Querschnitt U-förmiges Profil ausgebildet ist, das mit seinem dichtend an der Welle bzw. Stange anliegenden mittleren Teil (4) den Innenumfang des Dichtungsringes bedeckt und mit seinen beiden daran anschliessenden Schenkeln (5) die Stirnflächen (6) des Dichtungsringes nur auf einen Teil der radialen Ausdehnung bedeckt.

2. Dichtungs-Packung, bestehend aus einer Mehrzahl von auf einer gemeinsamen Achse unmittelbar nebeneinander angeordneten Dichtungsringen gemäß Anspruch 1, <u>dadurch gekennzeichnet,</u> daß zusätzlich zu den Dichtungsringen aus Graphit (1) mindestens als erster und letzter Dichtungsring (9 bzw. 10) weitere Dichtungsringe angeordnet sind, welche aus Reinasbest und/oder aus mit PTFE imprägniertem Reinasbest bestehen.

**Claims**

1. Sealing ring, made of graphite, with a cross-section which is essentially square said sealing ring having a coating of synthetic material on three adjoining outer surfaces, characterised in that the coating (4, 5) is made of polytetrafluorethylene (PTFE), which coating is destined to form an electrical insulation with respect to a shaft or rod penetrating the bore of the sealing ring and is designed as a profile being U-shaped in section, said profile covers the inner periphery of sealing ring with its central part (4) sealingly contacting the shaft or rod respectively and covers the end-faces (6) of sealing ring over a fraction of its radial extent only with its limbs (5) adjoining the central part.

2. Seal-packing composed of a plurality of sealing rings according to claim 1, these rings being arranged, directly beside one another, on a common axis, characterised in that, in addition to the graphite sealing rings (1), additional sealing rings are installed, at least as the first sealing ring and the last sealing ring (9 and 10 respectively), these additional sealing rings being composed of pure asbestos, and/or of pure asbestos which has been impregnated with PTFE.

1. Anneau d'étanchéité en graphite de section essentiellement carrée, presentant sur trois surfaces extérieures adjacentes un revetement en matière plastique, <u>caractérisé par le fait</u> que le revetement (4, 5) est réalisé en polytétrafluoroéthyléne (PTFE), que ce dernier est prévu comme isolation électrique par rapport à un axe ou une tige passant à traveis la forure de l'anneau d'étanchéité et qu'il est agencé, en section, en forme de U qui couvre, avec sa partie centrale (4) adhérent de façon étanche à l'axe ou à la tige, la circonference interieure de l'anneau d'étanchéité, couvrant avec ses deux ailes (5) y adjacentes les surfaces frontales (6) de l'anneau d'étanchéité seulement sur une partie de son extension radiale.

2. Garniture d'étanchéité, constituée par une pluralité d'anneaux d'étanchéité disposés directement les uns contre les autres suivant un axe commun selon la revendication 1, <u>caractérisée par le fait</u> qu'en plus des anneaux d'étanchéité en graphite (1) sont disposés au moins en tant que premier et dernier anneaux d'étanchéité (respectivement 9 et 10) d'autres anneaux d'étanchéité qui sont constitués en amiante pure et/ou en amiante pure imprégnée de PTFE.

Fig.1

Fig.2

Fig.3